# EUROPEAN PATENT APPLICATION

(11) **EP 4 539 204 A1**
(43) Date of publication of application: **16.04.2025**
(21) Application number: 24205795.8
(22) Date of filing: 10.10.2024
(51) Int. Cl.: H01M 10/48, H01M 50/209, H01M 50/298, H01M 50/503, H01M 50/507, H01M 50/569

(54) **BATTERY MODULE**

(30) Priority: 12.10.2023 CN 202311318949; 12.10.2023 CN 202322737880 U
(71) Applicant: Eve Energy Co. Ltd., Huizhou, Guangdong 516000 (CN)
(72) Inventor: Lan, Han, Huizhou, Guangdong, 516000 (CN)
(74) Representative: Petraz, Gilberto Luigi

(57) **Abstract**

Disclosed is a battery module in the present disclosure. The battery module includes: two cell sets provided back to back, poles of the cell sets extending out laterally; and a CCS assembly 100, electrically connected to each of the two cell sets, so as to realize electrical conduction between the two cell sets, and to realize temperature and voltage collection of each of the cell sets. The CCS assembly is arranged along a circumferential direction of the two cell sets and extends in a stacking direction of the single cells in each of the cell sets.

## Description

### CROSS-REFERENCE TO RELEATED APPLICATIONS

The present disclosure claims the priority of Chinese Patent Application No. 2023113189491 filed on October 12, 2023 before CNIPA, and Chinese Patent Application No. 2023227378808 filed on October 12, 2023 before CNIPA. All the above are hereby incorporated by reference in their entirety.

### TECHNICAL FIELD

The present disclosure relates to the technical field of batteries, and in particular to a battery module.

### BACKGROUND

A battery of 12 V may be applied to a generator to provide a strong starting current for starting the generator, and may also assist the generator in supplying power to an electrical device when the generator is overloaded.

When there are needs to increase the battery capacity of the battery of 12 V, it is usually to stack a greater number of single cells in a stacking direction of the single cells.

### SUMMARY

Stacking a greater number of single cells in a stacking direction results in an increase in the height of the cell sets, which does not facilitate installation on an electrical device.

Provided is a battery module in the present disclosure, including: two cell sets provided back to back, poles of the cell sets extending out laterally; and a CCS assembly 100, electrically connected to each of the two cell sets, so as to realize electrical conduction between the two the cell sets, and to realize temperature and voltage collection of each of the cell sets. The CCS assembly is arranged along a circumferential direction of the two cell sets and extends in a stacking direction of the single cells in each of the cell sets.

The two cell sets provided back to back allow power to be supplied through each cell set, so that the entire battery module in the present disclosure is able to provide more power supply compared to the way of supplying power with one cell set. Furthermore, as each of the cell sets takes up a respective height, the two cell sets are able to provide a larger power supply without taking up too much height space in the stacking direction of the single cells, which is more suitable for installation when the battery module is applied in an electric vehicle. Moreover, the CCS assembly is arranged along the peripheral direction of the two cell sets and extends in the stacking direction of the single cells to be adapted to the laterally extending structure of the poles of the cell sets 200, which makes full use of lateral space of the battery module.

### BRIEF DESCRIPTION OF THE DRAWINGS

Fig. 1 is a schematic structural diagram of a battery module in an implementation of the present disclosure;
Fig. 2 is a schematic structural diagram of a CCS assembly in Fig. 1;
Fig. 3 is a schematic diagram illustrating a partial exploded view of the CCS assembly in Fig. 2;
Fig. 4 is a schematic structural diagram of the CCS assembly in Fig. 2 with a support frame being hidden;
Fig. 5 is a schematic diagram illustrating a stacking method of the cell sets in Fig. 1; and
Fig. 6 is a schematic diagram illustrating a current direction of the CCS assembly and the cell sets in an implementation of the present disclosure.

Labels: 100 CCS assembly, 10 transmission structure, 11 support frame, 111 PET film, 112 first through-hole, 113 second through-hole, 114 connecting hole, 12 conduction unit, 121 connecting bar, 122 external connecting bar, 1221 external connecting segment, 1221a transition segment, 1121b electrical connecting segment, 1121c first projection, 1222 inner connecting segment, 1222a first branch, 13 collection unit, 131 collection wire, 132 wire harness sleeve, 20 transition bar, 21 connecting end, 211 second branch, 22 extension segment, 221 second projection, 30 connector, 40 cable tie, 50 insulating sleeve, 200 cell set, 210 single cell, 220 positive pole, 230 negative pole, 240 parallel group, 300 battery module.

### DETAILED DESCRIPTION

In the description of the present disclosure, it is to be noted that the terms "up", "down", "front", "back", "left", "right", "vertical", "horizontal", "top", "bottom", "inside", "outside" and other orientation or position relationships are based on the orientation or position relationships shown in the attached drawings. It is only intended to facilitate description of the present disclosure and simplify description, but not to indicate or imply that the referred device or element has a specific orientation, or is constructed and operated in a specific orientation. Therefore, they should not be construed as a limitation of the present disclosure.

Unless otherwise defined, all terms including technical and scientific terms used herein have the same meaning as commonly understood by those skilled in the art to which the present disclosure belongs. The terms used herein in the specification of the present disclosure are used only to describe specific embodiments and are not intended as a limitation of the disclosure.

The present disclosure is further described below in conjunction with the attached drawings.

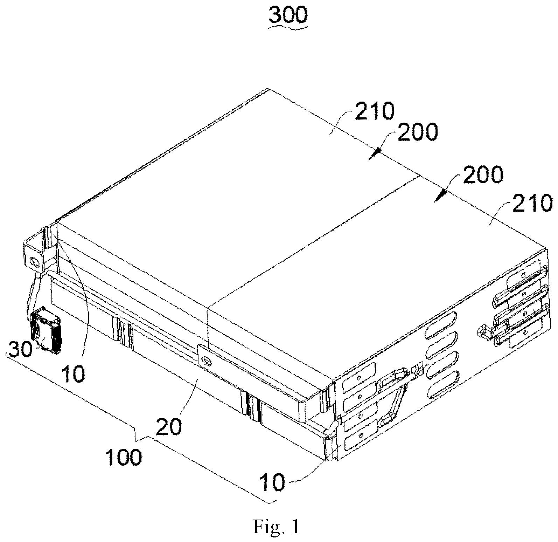

Referring to Figs. 1 to 6, provided is a battery module 300 according to the present disclosure, including a cell contact system, CCS, assembly 100, and two cell sets 200 provided back to back.

Referring to Fig. 1, the two cell sets 200 are provided back to back, and poles of the cell sets 200 extend out laterally. The CCS assembly is electrically connected to each of the two cell sets 200, so as to realize electrical conduction between the two the cell sets 200, and to realize temperature and voltage collection of each the cell set 200. The CCS assembly 100 is arranged along a peripheral direction of the two cell sets 200 and extends in a stacking direction of the single cells 210 in each of the cell sets 200.

The battery module 300 described above adopts the two cell sets 200 provided back to back to allow power to be supplied through each of the cell sets 200, so that the entire battery module 300 in the present implementation is able to provide more power supply compared to the way of supplying power with one cell set 200. Furthermore, as each of the cell sets 200 takes up a respective height, the two cell sets are able to provide a larger power supply without taking up too much height space in the stacking direction of the single cells 210, which is more suitable for installation when the battery module is applied in an electric vehicle. Moreover, the CCS assembly 100 is arranged along the peripheral direction of the two cell sets 200 and extends in the stacking direction of the single cells 210 to be adapted to the laterally extending structure of the poles of the cell sets 200, which makes full use of lateral space of the battery module 300.

In some implementations, referring to Figs. 1 to 4, in order to facilitate realizing the electrical connection between the two cell sets 200, the CCS assembly 100 includes two transmission structures 10 provided oppositely and an adapter bar 20, each of the transmission structures 10 is electrically connected to corresponding one of the cell sets 200, so as to realize electrical conduction as well as temperature and voltage collection within each of the two cell sets 200, and the adapter bar 20 is electrically connected to each of the two cell sets 200, so as to realize electrical conduction between the two cell sets 200. In this way, current transfer between the external structure and the inside of the cell set 200 as well as the temperature and voltage collection are realized through the transmission structures 10, and current transfer between the two cell sets 200 is realized through the adapter bar 20, the electrical conduction between the two cell sets 200 is realized as a whole. The entire CCS assembly 100 in the present implementation has a simpler structure and leads to a reduction in production costs compared to the way in which each of the transmission structures 10 is provided with a respective adapter structure and a respective adapter conductive block and is then connected by bolts.

In some implementations, each of the transmission structures 10 includes a support frame 11, and a conduction unit 12 and a collection unit 13 which are provided on the support frame 11. The conduction unit 12 is electrically connected to each of the single cells 210 to realize electrical conduction within each of the cell sets 200. The collection unit 13 includes a plurality of collection wires 131, and an end of the collection wires 131 is electrically connected to the conduction unit 12 or configured to mount a temperature collection member. Therefore, the transmission of voltage signals and temperature signals can be realized without the use of a circuit board by setting the components for temperature and voltage collection as collection wires 131, which leads to a reduction in production costs of the entire CCS assembly 100. Furthermore, the collection wires 131 in the present implementation are smaller in size and take up less space compared to the collection solution of employing the circuit board in the prior art, so that the entire collection unit 13 is more compact and the CCS assembly 100 can be simpler in structure.

In some implementations, the CCS assembly 100 further includes a connector 30. The transmission of electrical signals is realized through the connector 30 and a battery management system, BMS. Another end of the collection wires 131 is connected to the connector 30 to transmit the temperature and voltage signals from the connector 30 to the BMS.

In some implementations, in order to allow the collection wires 131 to realize the voltage collection, an end of part of collection wires 131 may be provided with a first connecting terminal, which is configured to be in welded connection with the conduction unit 12, and an end of part of collection wires 131 may be provided with a temperature collection sensor to collect the temperature information of the single cells 210 through the temperature collection sensor. In some implementations, a diameter of each of the collection wires 131 is in a range of 0.25 mm to 0.45 mm. The diameter of each of the collection wires 131 being set in the range allows the diameter of each of the collection wires 131 to have a certain size, thus ensuring that a welding contact area between each of the collection wires 131 and the conduction unit 12 is sufficient to meet a requirement of a peeling force at a welding point between each of the collection wires 131 and the conduction unit 12, and allows the diameter of each of the collection wires 131 to be not too large to take up a relatively large space, thus facilitating hot-press molding between the two layers of PET, polyethylene terephthalate, film 111.

In some implementations, the diameter of each of the collection wires 131 is set to 0.35 mm, to ensure a size of the welding area at the welding point between each of the collection wires 131 and the conduction unit 12, and to allow the diameter of the collection wires 131 to be not too large to take up a relatively large installation space. In other implementations, the diameter of each of the collection wires 131 may be set to another value within the range of 0.2 mm to 0.45 mm as required, such as 0.25 mm, 0.3 mm, 0.4 mm, 0.45 mm, or other values, which are not limited herein.

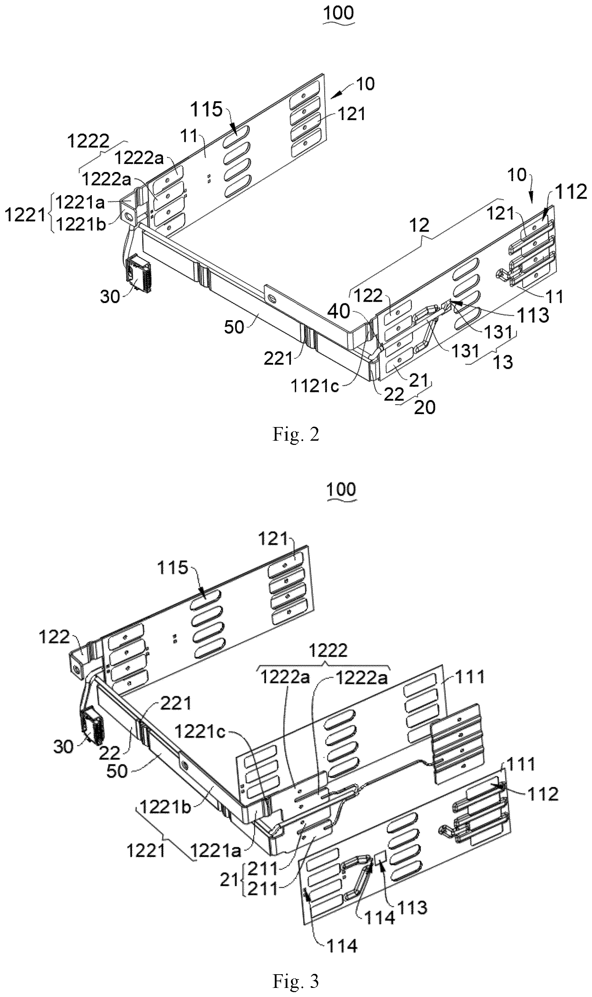

Referring to Fig. 3, in an implementation of the present disclosure, in order to facilitate the installation of the support frame 11 with the collection unit 13 and the conduction unit 12, respectively, the support frame 11 includes two PET films111 provided oppositely, the conduction unit 12 and part of the collection unit 13 are hot-pressed between the two PET films 111, and part of the collection unit 13 passes through the PET films 111. In such an arrangement, the conduction unit 12 and part of the collection unit 13 are able to be sandwiched between the two PET films 111 by the way of setting the support frame 11 as two PET films 111, which allows the connection between the collection unit 13 and the conduction unit 12 to be shielded to ensure an insulating effect. Compared to the way of using UV adhesive to protect the welding point at the connection between the collection unit 13 and the conduction unit 12, the way of hot-pressing the two PET films 111 improves the reliability of protecting the welding point, and has a simpler mounting process, which improves the production efficiency.

In some implementations, the PET films are provided with a first through-hole 112 and a second through-hole 113, the first through-hole 112 is configured to be mounted with the conduction unit 12 to allows the conduction unit 12 to be exposed from the first through-hole 112, thereby facilitating the welding of the conduction unit 12 and the poles of the single cells 210. The second through-hole 113 is configured to be passed through by the collection unit 13, so that the passed through part of the collection unit 13 is able to be connected to the connector 30.

In some implementations, when mounting the collection wire 131, part of the collection wires 131 is hot-pressed between the two PET films 111, and part of the collection wires 131 passes through the PET films 111 and is then connected to the connector 30. Since the conduction unit 12 is welded with a plurality of collection wires 131, in order to facilitate the installation of all of the collection wires 131, the collection unit 13 further includes a wire harness sleeve 132 and the wire harness sleeve 132 is sleeved outside the plurality of collection wires 131, which allows the plurality of collection wires 131 to be sleeved as a whole, thereby preventing the plurality of collection wires 131 from being in a loose state so as not to affect the assembly of the entire battery module 300.

In some implementations, since the collection wires 131 and the wire harness sleeve 132 have a certain length, in order to prevent the collection wires 131 and the harness sleeve 132 from being in a messy state when the entire CCS assembly 100 is assembled to form the battery module 300, the support frame 11 is provided with a connecting hole 114, and the CCS assembly 100 further includes at least one cable tie 40, and the at least one cable tie 40 is configured to pass through the connecting hole 114 to bind the collection wires 131 and the wire harness sleeve 132 to the support frame 11. Therefore, the wire harness sleeve 132 and the collection wires 131 are bound to the support frame 11 by the cable tie 40, which prevents the collection wires 131 from being in a state of being placed in the messy state, avoiding affecting the assembly of the CCS assembly 100 and the cell set 200, and ensuring a neatness when the CCS assembly 100 and the cell set 200 are assembled to form the battery module 300.

In some implementations, since part of the collection wires 131 is hot-pressed between the two PET films 111 and the PET films 111 has a certain degree of softness during hot-pressing, an imitation structure that is consistent with a shape of the collection wires 131 is formed on the PET films 111 when the two PET films 111 and the collection wires 131 are hot-pressed and molded.

Referring to Figs. 2 to 4, shown is a structure of the conduction unit 12 in an implementation of the present disclosure. The conduction unit 12 includes a connecting bar 121 and an external connecting bar 122. The external connecting bar 122 is configured to be electrically connected to the single cell 210 at an input or an output end of the cell sets 200, and configured to be electrically conducted with an external structure. The connecting bar 121 is configured to realize the series-parallel connection of the single cells 210 in each of the cell sets 200 and is connected to the adapter bar 20 in series. In this way, the input or output of current is realized by means of the external connecting bar 122 electrically conducting with the external structure, the single cells 210 in each of the cell sets 200 connected in series and in parallel is realized by the connecting bar 121, and the connecting bar 121 is connected to the adapter bar 20 in series, so as to realize the current conduction of one of the transmission structures 10 with the other thereof, and ultimately, it is possible to realize the series connection of the two cell sets 200, so as to enable the two cell sets 200 in series connection to provide sufficient power to an electrical device. The two provided cell sets 200 are able to lead to a reduction in the height in a stacking direction of the single cells 210, and thus are adapted for the installation when applied within an electric vehicle.

In some implementations, the battery module includes two external connecting bars 122. When one of the external connecting bars 122 in one of the transmission structures 10 is an input bar, the other is an output bar. One of the external connecting bars is configured to input the current, and the other is configured to output the current, thereby realizing current flow between the two cell sets 200 and the external structure.

In some implementations, the CCS assembly 100 is configured to realize a way of a multi-series and multi-parallel connection of the two cell sets 200, so as to allow more single cells 210 to be connected in parallel, thereby increasing the power supply capacity of the single cells 210 applied to the battery module 300.

In order to facilitate the assembly of the entire CCS assembly 100, each of the external connecting bars 122 includes an external connecting segment 1221 and an inner connecting segment 1222 integrally provided, the external connecting segment 1221 is configured to be electrically conducted with the external structure, the inner connecting segment 1222 includes at least two first branches 1222a provided side by side, and each of the first branches 1222a is configured to be electrically connected to corresponding one of the poles of each of the single cells 210, and to be electrically connected to the collection wires 131. Thereby, the external connecting bars 122 not only realize electrical connection with the external structure, but are also capable of realizing electrical connection with the internal single cells 210. Since each of the external connecting bars 122 includes a plurality of first branches 1222a provided side by side, the parallel connection of the plurality of single cells 210 by the external connecting bar 122 is realized when each of the first branches 1222a is electrically connected to corresponding one of the single cells 210, for example, when electrically connected to a negative pole of each of the single cells 210. When the current is input through the external connecting bar 122, the current is conducted to and within the single cells 210, is conducted through the positive poles of the single cells 210 to the connecting bar 121, is then conducted through the connecting bar 121 to other single cells 210 connected to the connecting bar 121, and is ultimately conducted through the adapter bar 20 to the other cell sets 200, which is then output from the other cell set 200, thereby circulating the current. In some implementations, the number of first branches 1222a is consistent with the number of single cells 210 connected in parallel.

In order to enable a reasonable configuration of the battery module 300 in structure when the CCS assembly 100 and the cell sets 200 are assembled into the battery module 300, the external connecting segment 1221 includes a transition part 1221a and an electrical connecting part 1121b, the transition part 1221a is connected between each of the first branches 1222a and the electrical connecting part 1121b, the electrical connecting part 1121b is configured to be electrically conducted with the external structure, the transition part 1221a is parallel to the support frame 11 and perpendicular to the electrical connecting part 1121b, and the electrical connecting part 1121b is positioned on a side of the cell sets 200. In this way, the two external connecting bars 122 are extended in a lateral direction of the cell sets 200 by means of the electrical connecting part 1121b being perpendicular to the transition part 1221a, and are able to be positioned on the same side of the two cell sets 200, ensuring the compactness of the structure when assembled into the battery module 300.

In some implementations, in order to save the cost of the entire CCS assembly 100, each end of the adapter bar 20 is electrically connected to corresponding one of the cell sets 200, respectively, and electrically connected to the collection unit 13. That is, the adapter bar 20 not only realizes the electrical conduction between the two transmission structures 10, but also directly realizes the electrical conduction of the single cells 210, which is equivalent to also having the role of the connecting bar 121, and the current from the single cells 210 is directly conducted to the other cell set 200 through the adapter bar 20, so as to enable simplicity in the structure of the entire CCS assembly 100.

In some implementations, the adapter bar 20 includes two connecting ends 21, the connecting ends 21 are connected to the support frame 11, and are further configured to realize the parallel connection of at least two single cells 210. Corresponding to the number of single cells 210 in corresponding one of the cell sets 200, the connecting ends 21 include at least two second branches 211, and each of the second branches 211 is electrically connected to corresponding one of the single cells 210. In some implementations, each of the second branches 211 is in welded connection with one of the poles of corresponding one of the single cells 210, thereby realizing a parallel connection of two single cells 210 within a parallel group 240, and also realizing a series connection with the connecting bar 121.

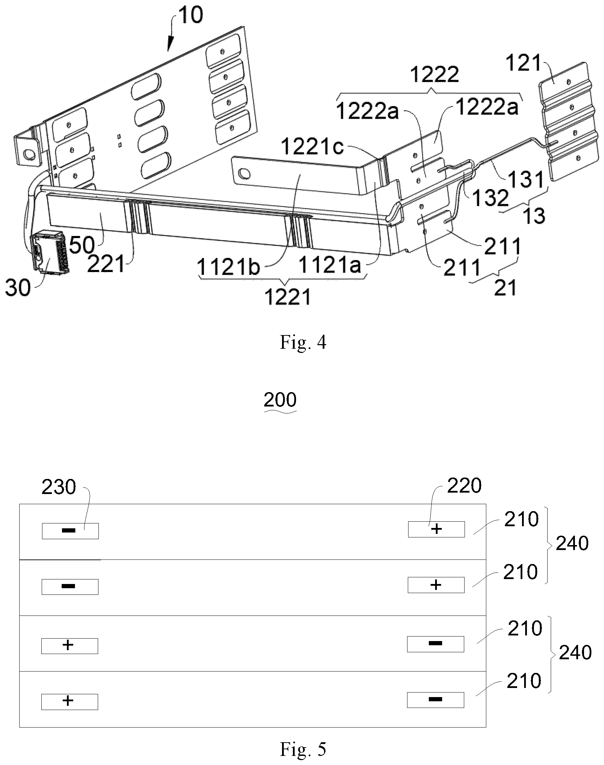

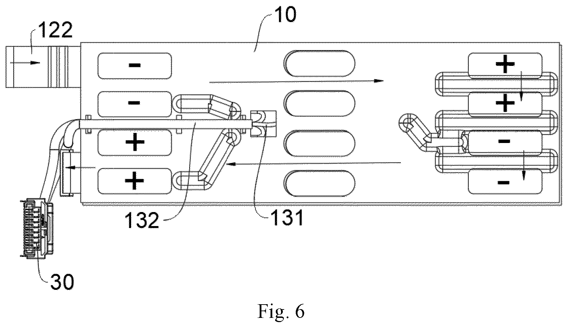

In some implementations, referring to Figs. 5 and 6, the CCS assembly 100 is configured to realize a power supply module with two parallel connections and four series connections. Each of the external connecting bars 122 includes two first branches 1222a provided side by side, which are configured to realize the parallel connection of two of the single cells 210, and each of the connecting ends 21 includes two second branches 211, which are configured to realize the parallel connection of two of the single cells 210, so that each two of the single cells 210 connected in parallel forms a parallel group 240. Each of the cell sets 200 includes two parallel groups 240. Each two of the parallel groups 240 is connected in series through the connecting bar 121, and each of the connecting bar 121 is further configured to realize the parallel connection of the two single cells 210 in each of the parallel groups 240. When it is necessary to increase the amount of power supply from the cell sets 200, the number of single cells 210 connected in parallel in each of the parallel groups 240 may be increased.

In some implementations, in order to ensure the compactness when assembled into the battery module 300, the adapter bar 20 further includes an extension segment 22 connected between the two connecting ends 21. The extension segment 22, the two external connecting bars 122, and the connector 30 are provided on a same side of the cell sets, i.e., positioned at a same end of the supporting frame 11. That is, the structures that need to be electrically connected to the external connecting structure are all provided at the same end of the support frame 11, i.e., all provided at the same side of the cell set 200, which facilitates assembly of forming the battery module 300.

In some implementations, in order to improve the applicability of the entire CCS assembly, the transition part 1221a of each of the external connecting bars 122 is provided with at least one first projection 1121c, the extension segment 22 of the adapter bar 20 is formed with at least one second projection 221, and both the first projection 1121c and the second projection 221 are extended in the stacking direction of the single cells 210. Thereby, by providing the first projection 1121c and the second projection 221, the CCS assembly 100, when mounted on the two cell sets 200, is able to be compressed at the two kinds of projections, which is adapted to the assembly tolerance, and is able to be adapted to more types of the single cells 210. In a direction of the length of the extension segment 22, i.e., in a parallel direction of the two cell sets 200, it may be stretched at the first projection 1121c and the second projection 221 when the length of the single cells 210 becomes longer, and it may be compressed at the first projection 1121c and the second projection 221 when the length of the single cells 210 becomes shorter, so as to enable the CCS assembly 100 to have greater applicability.

In some implementations, the CCS assembly 100 is configured to assemble two cell sets 200 with two parallel connections and four series connections, and the number of single cells 210 is relatively low, so that the amount of current flowing in the adapter bar 20 is relatively low, and the adapter bar 20 requires a relatively low overcurrent capacity. The adapter bar 20 is an aluminum bar, and the adapter bar 20 made of the aluminum material, compared to the way of using a copper bar, is capable of achieving the effect of reducing the cost of use due to the lower price of the aluminum bars.

In some implementations, in order to ensure normal use when the CCS assembly 100 and the cell set 200 are assembled into the battery module 300, the CCS assembly 100 further includes an insulating sleeve 50, and the insulating sleeve 50 is sleeved outside the extension segment 22, so as to protect the extension segment 22 by the insulating sleeve 50, avoiding the normal use of the battery module 300 due to the electrical conduction between the extension segment 22 and other parts.

Referring to Fig. 5, shown is a stacking method of the cell sets 200 in the present implementation. Each of the cell sets 200 includes four single cells 210, and each two of the single cells 210 is a parallel group 240. The positive poles 220 of the two single cells 210 in each of the parallel groups 240 are all at a same end, and the negative poles 230 thereof are all at another same end. An arrangement of the positive poles 220 and the negative poles 230 of one of the two parallel groups 240 is in an opposite direction to that of the other. In this way, a series connection effect of the four parallel groups 240 is realized by the conduction of the conduction unit 12 and the adapter bar 122. Fig. 6 shows a schematic diagram illustrating a current direction the current in the single cells 210 in the present implementation.

## Claims

1. A battery module (300), comprising:
two cell sets (200) provided back to back, poles of the cell sets (200) extending out laterally; and
a CCS assembly (100), electrically connected to each of the two cell sets (200), so as to realize electrical conduction between the two cell sets (200), and to realize temperature and voltage collection of each of the cell sets (200), wherein the CCS assembly (100) is arranged along a peripheral direction of the two cell sets (200) and extends in a stacking direction of single cells (210) in each of the cell sets (200).

2. The battery module (300) according to claim 1, wherein the CCS assembly (100) comprises two transmission structures (10) provided oppositely and an adapter bar (20), each transmission structure (10) is electrically connected to corresponding one of the cell sets (200), so as to realize electrical conduction as well as temperature and voltage collection in each of the cell sets (200), and the adapter bar (20) is electrically connected to each of the two cell sets (200), so as to realize electrical conduction between the two cell sets (200).

3. The battery module (300) according to claim 2, wherein the transmission structure (10) comprises a supporting frame (11) and a conduction unit (12) and a collection unit (13) provided on the support frame (11), wherein the conduction unit (12) is electrically connected to each of the single cells (210), so as to realize electrical conduction in the cell sets (200), the collection unit (13) comprises a plurality of collection wires (131), an end of the plurality of collection wires (131) is electrically connected to the conduction unit (12) or is configured to mount a temperature collection member.

4. The battery module (300) according to claim 3, wherein a diameter of each of the plurality of collection wires (131) is in a range of 0.25 mm to 0.45 mm.

5. The battery module (300) according to claim 3 or 4, wherein the collection unit (13) further comprises a wire harness sleeve (132), and the wire harness sleeve (132) is sleeved outside the plurality of the collection wires (131).

6. The battery module (300) according to claim 5, wherein the support frame (11) is provided with a connecting hole (114), the CCS assembly (100) further comprises at least one cable tie (40), and the at least one cable tie (40) is configured to be passed through the connecting hole (114) to bind the collection wires (131) and the wire harness sleeve (132) to the support frame (11).

7. The battery module (300) according to claim 3 or 4, wherein the conduction unit (12) comprises a connecting bar (121) and an external connecting bar (122), the external connecting bar (122) is configured to be electrically connected to the single cell (210) at an input or an output of one of the cell sets (200), and is configured to be electrically conducted with an external structure, the connecting bar (121) is configured to realize that the single cells (210) in each of the cell sets (200) are connected in series and in parallel, and the connecting bar (121) is connected to the adapter bar (20) in series.

8. The battery module (300) according to claim 7, wherein the external connecting bar (122) comprises an external connecting segment (1221) and an inner connecting segment (1222) integrally provided, the external connecting segment (1221) is configured to be electrically conducted with the external structure, the inner connecting segment (1222) comprises at least two first branches (1222a) provided side by side, each of the first branches (1222a) is configured to be electrically connected to one of the poles of corresponding one of the single cells (210), and to be electrically connected to the plurality of collection wires (131).

9. The battery module (300) according to claim 8, wherein the external connecting segment (1221) comprises a transition part (1221a) and an electrical connecting part (1121b), the transition part (1221a) is connected between each of the first branches (1222a) and the electrical connecting part (1121b), the electrical connecting part (1121b) is configured to be electrically conducted with the external structure, the transition part (1221a) is parallel to the support frame (11) and perpendicular to the electrical connecting part (1121b), and the electrical connecting part (1121b) is positioned on a side of the cell sets (200).

10. The battery module (300) according to claim 9, wherein the adapter bar (20) comprises two connecting ends (21), the connecting ends (21) are connected to the support frame (11), and further configured to realize parallel connection of at least two of the single cells (210), the connecting ends (21) comprise at least two second branches (211), and each of the second branches (211) is electrically connected to corresponding one of the single cells (210).

11. The battery module (300) according to claim 10, wherein the adapter bar (20) further comprises an extension segment (22) connected between the two connecting ends (21), and the extension segment (22), the two external connecting bars (122), and a connector (30) are provided on a same side of the cell sets (200).

12. The battery module (300) according to claim 11, wherein the transition part (1221a) is provided with at least one first projection (1121c), the extension segment (22) is formed with at least one second projection (221), and both the first projection (1121c) and the second projection (221) are extended in a stacking direction of the single cells (210).

13. The battery module (300) according to claim 11, wherein the CCS assembly (100) further comprises an insulating sleeve (50), and the insulating sleeve (50) is sleeved outside the extension segment (22).

14. The battery module (300) according to any one of claims 3, 4, and 8-13, wherein the support frame (11) comprises two PET films (111) provided oppositely, the conduction unit (12) and part of the collection wires (131) is hot-pressed between the two PET films (111).
